# EUROPÄISCHE PATENTSCHRIFT

(11) **EP 0 597 405 B1**
(45) Veröffentlichungstag und Bekanntmachung des Hinweises auf die Patenterteilung: **24.01.1996**
(21) Anmeldenummer: 93118017.8
(22) Anmeldetag: 06.11.1993
(51) Int. Cl.: B65G 69/28

(54) **Gebäude mit einer Überfahrbrücke**
Building equipped with a loading bridge
Bâtiment équipé d'une passerelle de chargement

(30) Priorität: 12.11.1992 DE 4238221
(43) Veröffentlichungstag der Anmeldung: 18.05.1994
(73) Patentinhaber: ALTEN GERÄTEBAU GMBH, D-30974 Wennigsen (DE)
(72) Erfinder: Mayer, Heinz-Gerd, D-30952 Ronnenberg (DE)
(74) Vertreter: Depmeyer, Lothar

(56) Entgegenhaltungen:
- EP-A- 0 464 699
- DE-A- 3 814 351
- DE-C- 458 981
- DE-U- 9 011 279
- US-A- 4 010 571

## Beschreibung

Die Erfindung geht aus von einem Gebäude, insb. einem Kühlhaus, oder einem Gebäude mit erhöhter Innentemperatur, mit einer im Bereich seiner verchliessbaren Gebäudeöffnung befindlichen Überfahrbrücke, deren an ihrem hinteren Ende um eine waagerechte Achse verschwenkbare Brückenplatte zum Auflegen ihres vorderen Endes auf die Plattform eines zu be- bzw. entladenden Fahrzeuges sich oberhalb oder innerhalb einer Ausnehmung zum Hineinschwenken der Brückenplatte befindet und mit ihrem freien Ende im Abstand von dem heb- und senkbaren Verschlusselement für die Gebäudeöffnung im abgesenkten Zustand des Verschlusselementes angeordnet ist, wobei das abgesenkte Verschlusselement die Ausnehmung nach vorne hin verschliesst (siehe zum Beispiel die DE-U-9 011 279).

Bei den bekannten Gebäuden dieser Art ergibt sich aufgrund des durch das Verschlusselement bewirkten Abschlusses der Ausnehmung nach vorne hin bereits eine gute Wärmeisolation, jedoch können sich bei diesen Gebäuden deshalb Schwierigkeiten ergeben, weil die Brückenplatte bzw. die an ihrem freien Ende befindliche Verlängerung nicht dichtend und spaltlos an das Verschlusselement - meistens ein Sektionaltor - herangeführt ist. Der somit vorhandene Spalt ist nicht nur gefährlich, vielmehr kann er auch zu Wärmeverlusten führen, da über ihn der Raum unterhalb der Brückenplatte mit dem Innenraum des Gebäudes in Verbindung steht.

Aufgrund der Erfindung sollen diese Nachteile beseitigt werden; die Erfindung strebt also eine wärmetechnische Verbesserung und zudem eine Verminderung der Unfallgefahr im Bereich des freien Endes der Überfahrbrücke bzw. ihrer Brückenplatte an.

Diese Aufgabe wird erfindungsgemäss dadurch gelöst, dass das Verschlusselement an seiner Innenseite mit einem sich zusammen mit dem Verschlusselement heb- und senkbaren Abdeckstreifen für den erwähnten Spalt versehen ist. Zweckmässigerweise wird dieser Abdeckstreifen entweder steif ausgeführt und an dem Verschlusselement angelenkt oder aber auch biegsam ausgeführt, und zwar so, dass der Abdeckstreifen seine etwa waagerechte Wirklage einnimmt, wenn das Verschlusselement abgesenkt ist und mitgenommen werden kann, wenn das Verschlusselement zum Öffnen der Gebeäudeöffnung angehoben werden muss.

Ein solcher Abdeckstreifen bildet einen Tritt- bzw. Überfahrschutz; der Bereich der Brückenplatte nahe vor dem Verschlusselement kann somit gefahrenlos überfahren bzw. begangen werden; zudem verhindert der Abdeckstreifen einen Luftaustausch zwischen dem Inneren des Gebäudes und dem Raum unterhalb der Brückenplatte. Deshalb bringt der Abdeckstreifen auch wärmetechnische Vorteile.

Weitere Einzelheiten der Erfindung werden anhand der Zeichnung erläutert, in der Ausführungsbeispiele der Erfindung dargestellt sind. Es zeigen :
- Fig. 1: einen senkrechten Schnitt durch den vorderen Teil eines Lagerhauses im Bereich einer Gebäudeöffnung,
- Fig. 2: einen Schnitt nach der Linie II - II von Fig. 1 und
- Fig. 3 - 5: je Einzelheiten eines erfindungsgemässen Gebäudes, und zwar je einen senkrechten Teilschnitt durch den vorderen Teil einer Überfahrbrücke und einem benachbarten Abschnitt eines Verschlusselementes für die Gebäudeöffnung, und zwar gemäss Schnitt III - III in Fig. 2 in Richtung des Pfeiels III gesehen.

Das Gebäude hat eine Aussenwand 1 und eine torartige Öffnung 2, davor befindet sich eine Fahrbahn 3 für zu be- oder entladende Fahrzeuge; eine Plattform 4 einer Fahrzeugpritsche ist dargestellt.

Auf der Fahrbahnfläche 5 innerhalb des Gebäudes können Fahrzeuge z.B. Gabelstapler, bewegt werden, um den Ladebetrieb durchführen zu können.

In der Fahrbahnfläche 5 befindet sich vor der Öffnung 2 eine rechteckige Ausnehmung 7, in der eine Überfahrbrücke installiert ist. Ihre Brückenplatte 8 ist am hinteren Ende um eine waagerechte Achse 9 verschwenkbar gelagert, damit die Brückenplatte 8 in Richtung des Doppelpfeiles 11 nach oben oder nach unten verschwenkt werden kann. Zum Verschwenken dient ein Hubzylinder 12, der sich auf einem Querträger 13 abstützt. In der Ruhestellung schliesst die Brückenplatte 8 mit der Fahrbahnfläche 5 ab; die Brückenplatte 8 kann beliebig überfahren werden und ist dementsprechend fest unterstützt.

Am freien Ende der Brückenplatte 8 ist diese mit einer ein- und ausfahrbaren Verlängerung 14 versehen, mit der beim Ladebetrieb der Spalt zwischen der vorderen Kante 10 der Brückenplatte 8 und der Plattform 4 überbrückt wird.

Die Öffnung 2 wird bei der in Ruhestellung befindlichen Überfahrbrücke durch ein heb- und senkbares Sektionaltor verschlossen, desssen gelenkig miteinander verbundene Sektionen mit 15 bezeichnet sind, die im geöffneten Zustand nach oben in eine waagerechte Lage überführt werden können. Anstelle des Sektionaltores können auch andere Verschlüsse benbutzt werden, die jedoch ebenfalls heb- und senkbar anzuordnen sind.

Wenn die Öffnung 2 verschlossen ist, liegt der untere Rand des Verschlusselementes bzw. der Sektion 15 auf einer isolierenden Zwischenplatte 16 auf, damit eine gute Wärmeisolation sowohl nach vorne hin - vom Inneren des Gebäudes aus gesehen - als auch nach unten hin erreichbar ist. Das Sektionaltor mit den Sektionen 15 verschliesst also nicht nur die Öffnung 2, sondern auch die Ausnehmung 7 nach vorne hin. Da die Öffnung 2 breiter ist als die Überfahrbrücke, befinden sich zu beiden Seiten der Überfahrbrücke in der Rampe schmale Ausnehmungen 17, auf deren Grund der untere Rand der zu unterst gelegenen Sektion 15 aufsetzen kann.

Durch die Zwischenplatte 16 wird darunter eine Tasche 18 geschaffen, in die Ladehilfen ( Hubbühnen und dgl. ) am Heck von Lastfahrzeugen eingeführt werden können, wenn diese Ladehilfen wegen der Überfahrbrücke nicht benötigt werden.

Da aus rein mechanischen Gründen die vordere Kante 10 nicht fugendicht an einer Sektion 15 anliegen kann, ergibt sich nicht nur zwischen der Kante 10 und der Sektion 15 ein Spalt x, sondern ebenfalls aus Herstellungsgründen ein Spalt Y im Bereich der Ausnehmung zwischen der Sektion 15 und der Kante 18.

Um die mit dieser Spaltbildung verbundenen Unfallgefahren auszuschalten, ist aufgrund der Erfindung die im geschlossenen Zustand der Öffnung 2 der Kante 10 benachbart liegende Sektion 15 mit einem um eine waagerechte Achse schwenkbaren Abdeckstreifen 19 versehen, der im angehobenen Zustand der Sektionen 15 schräg nach unten zeigt und in dieser Ruhestellung an einem Widerlager 20 unten anliegt. Die Schräglage ist dabei so gewählt, dass beim Absenken der Sektionen 15 und dem dabei eintretenden Auftreffen der Spitze 21 der Abdeckstreifen 19 in die etwa waagerechte Endposition ( untere, gestrichelte Darstellung ) übergehen kann. In dieser Wirklage überdeckt der Abdeckstreifen 19 bei entsprechender Bemessung der Länge nach die Spalte x und y.

Wenn der Abdeckstreifen 19 aus einem biegesteifen Werkstoff hergesetllt ist, bildet er einen tritt- bzw. überfahrfesten Untergrund.

Oberhalb des Abdeckstreifens 19 kann noch ein elektrischer Schalter 22 angeordnet sein, der auf einen Anschlag des Abdeckstreifens 19 beim Verschwenken nach oben anspricht und z.B. den Antrieb für die Sektionen abschaltet. Demgemäss ist der im Verschwenkbereich des Abdeckstreifens 19 gelegene Schalter 22 ein Sicherheitsschalter, womit der Abdeckstreifen 19 eine Doppelfunktion erfüllt.

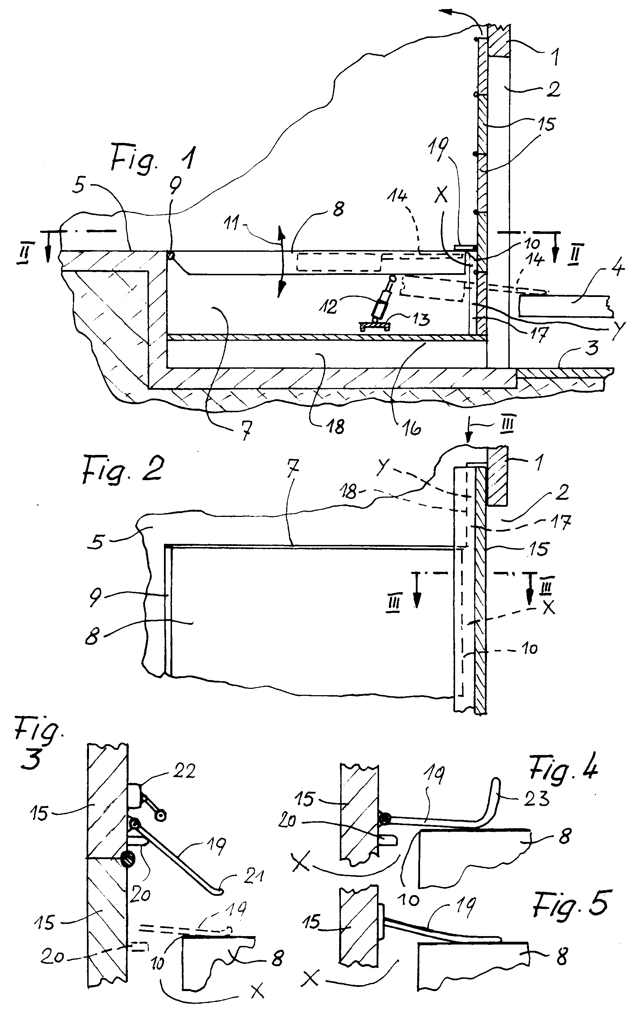

Gemäss Fig. 4 ist der Abdeckstreifen 19 im Bereich seines freien Endes mit einem nach oben gerichteten Vorsprung in Form einer Abbiegung 23 versehen, die einen Ramm- oder Anstosschutz für die empfindlichen Sektionen 15 bilden kann.

Die Ausführung gemäss Fig. 5 sieht nicht eine Anlenkung des Abdeckstreifens 19, sondern einen Streifen aus einem durch Biegen verformbaren Werkstoff z.B. härterem Gummi vor. Diese Ausbildung hat den Vorteil einer besonders guten Abdichtung und erspart die Verwendung eines Gelenkes, da der Abdeckstreifen 19 in sich verformbar ist.

Der Abdeckstreifen 19 bildet jedoch nicht nur eine Spaltüberbrückung, um Unfallgefahren auszuschliessen, vielmehr hat er noch eine bedeutende wärmetechnische Bedeutung. Er verschliesst nämlich den unterhalb der Brückenplatte 8 befindlichen Raum ab. Demgemäss ergibt sich unterhalb der Brückenplatte 8 ein stark isolierendes Luftpolster.

In Fig. 1 ist im übrigen gestrichelt dargestellt, wie die ausgefahrene Verlängerung 14 bei geöffnetem Gebäudeverschluss auf der Plattform 4 aufliegt.

## Patentansprüche

1. Gebäude, insb. Kühlhaus oder Gebäude mit erhöhter Innentemperatur, mit einer im Bereich seiner verschliessbaren Gebäudeöffnung (2) befindlichen Überfahrbrücke, deren an ihrem hinteren Ende um eine waagerechte Achse verschwenkbare Brückenplatte (8) zum Auflegen ihres vorderen, ggfs. mit einer Verlängerung (14) versehenen Endes auf die Plattform eines zu be- bzw. entladenden Fahrzeuges sich oberhalb oder innerhalb einer Ausnehmung zum Hineinschwenken der Brückenplatte (8) befindet und mit ihrem freien Ende im Abstand von dem heb- und senkbaren Verschlusselement (15) für die Gebäudeöffnung (2) im abgesenkten Zustand des Verschlusselementes (15) angeordnet ist, wobei das abgesenkte Verschlusselement (15) die Ausnehmung nach vorne hin verschliesst, zumindest aber mit seinem unteren Ende in Höhe des freien Endes der Brückenplatte (8) angeordnet ist, dadurch gekennzeichnet, dass das Verschlusselement (15) an seiner Innenseite, d.h. der zum Inneren des Gebäudes hin zugekehrten Seite, mit einem sich mit dem Verschlusselement heb- und senkbaren Abdeckstreifen (19) zum Überbrücken des Spaltes zwischen der Brückenplatte (8) und dem Verschlusselement (15) versehen ist.

2. Gebäude nach Anspruch 1, dadurch gekennzeichnet, dass bei gegenüber der Brückenplatte (8) breiteren Verschlusselementen (15), die mit ihren Enden in eine neben der Ausnehmung (7) befindliche Vertiefung (17) eintauchen, der Abdeckstreifen (19) auch den zwischen dem Verschlusselement (15) und dem Rand der Vertiefung (17) befindlichen Spalt (y) überdeckt.

3. Gebäude nach Anspruch 1, dadurch gekennzeichnet, dass der Abdeckstreifen (19) eine zum Betreten oder Überfahren ausreichend grosse Biegesteifigkeit aufweist.

4. Gebäude nach Anspruch 1, dadurch gekennzeichnet, dass der Abdeckstreifen (19) einstückig ausgebildet ist.

5. Gebäude nach Anspruch 1, dadurch gekennzeichnet, dass der Abdeckstreifen (19) an dem Verschlusselement (15) angelenkt ist und in seiner Ruhestellung ( Fig. 3 oben ) eine solche Schrägstellung einnimmt, dass er beim Absenken des Verschlusselementes (15) und Auftreffen auf die Brückenplatte (8) seine Winkelstellung gegenüber dem Verschlusselement (15) vergrössert.

6. Gebäude nach Anspruch 1 und 5, dadurch gekennzeichnet, dass der Absdeckstreifen (19) in seiner Wirkstellung im wesentlichen waagerecht angeordnet ist.

7. Gebäude nach Anspruch 5, dadurch gekennzeichnet, dass der Abdeckstreifen (19) durch ein Widerlager (20) an einer Verschwenkung nach unten gesichert ist.

8. Gebäude nach Anspruch 1, dadurch gekennzeichnet, dass der Abdeckstreifen (19) im Bereich seines vorderen Endes mit einem nach oben gerichteten Vorsprung (23) als Ramm- oder Anstosschutz für das Verschlusselement (15) versehen ist.

9. Gebäude nach Anspruch 5, dadurch gekennzeichnet, dass dem Abdeckstreifen (19) ein elektrischer Brührungsschalter (22) z.B. auf den Antrieb des Verschlusselemntes (15) einwirkend zugeordnet ist, der beim Verschwenken des Abdeckstreifens (19) nach oben betätigbar ist.

10. Gebäude nach Anspruch 1, dadurch gekennzeichnet, dass zumindest das freie Ende des Abdeckstreifens (19) beim Auftreffen auf die Brückenplatte (8) elastisch verformbar bzw. verbiegbar ist.

11. Gebäude nach Anspruch 5, dadurch gekennzeichnet, dass der Abdeckstreifen (19) an seinem freien Ende abgerundet oder mit einer Rolle versehen ist.

## Claims

1. Building, more especially a cold store building or a building with a high internal temperature, having a bridging member which is situated in the region of its sealable building opening (2), the bridge plate (8) of said bridging member being pivotable about a horizontal axis at its rear end and being situated above or internally of a recess for the inward pivotal movement of the bridge plate (8) in order for its front end, which is possibly provided with an extension member (14), to be placed upon the platform of a vehicle to be loaded or unloaded, said bridge plate being disposed with its free end at a spacing from the raisable and lowerable closure element (15) for sealing the building opening (2) when the closure element (15) is in its lowered position, the lowered closure element (15) sealing the recess forwardly, but being disposed, at least with its lower end, on a level with the free end of the bridge plate (8), characterised in that the closure element (15) is provided, on its inside surface, i.e. on the surface facing the interior of the building, with a cover strip (19), which is raisable and lowerable with the closure element, for bridging the gap between the bridge plate (8) and the closure element (15).

2. Building according to claim 1, characterised in that, when the closure elements (15) are wider than the bridge plate (8) and extend with their ends into an indentation (17) situated adjacent the recess (7), the cover strip (19) also covers the gap (y) situated between the closure element (15) and the edge of the indentation (17).

3. Building according to claim 1, characterised in that the cover strip (19) has a bending resistance which is sufficiently high to allow it to be walked-on or driven-over.

4. Building according to claim 1, characterised in that the cover strip (19) is a one-piece construction.

5. Building according to claim 1, characterised in that the cover strip (19) is pivotally mounted on the closure element (15) and assumes, in its inoperative position (top of Fig. 3), such an inclined position that it increases its angular position relative to the closure element (15) when the closure element (15) is lowered and the cover strip encounters the bridge plate (8).

6. Building according to claims 1 and 5, characterised in that the cover strip (19) is substantially horizontally disposed in its operative position.

7. Building according to claim 5, characterised in that the cover strip (19) is prevented from pivoting downwardly by an abutment (20).

8. Building according to claim 1, characterised in that the cover strip (19) is provided, in the region of its front end, with an upwardly orientated projection member (23) which serves to prevent the closure element (15) from being rammed or struck.

9. Building according to claim 5, characterised in that an electrical contact switch (22) is associated with the cover strip (19), e.g. to act on the drive for the closure element (15), and said switch is actuatable when the cover strip (19) is pivoted upwardly.

10. Building according to claim 1, characterised in that at least the free end of the cover strip (19) is resiliently deformable or bendable for encountering the bridge plate (8).

11. Building according to claim 5, characterised in that the cover strip (19) is rounded at its free end or is provided with a roller.

## Revendications

1. Bâtiment, notamment entrepôt frigorifique, ou bâtiment ayant une température intérieure élevée, qui a un niveleur de quai, qui se trouve dans la zone de sa baie (2) qui peut être fermée, dont le tablier (8), qui peut basculer à son extrémité arrière par rapport à un axe horizontal, se trouve, afin d'appuyer son extrémité avant, éventuellement munie d'un prolongement (14), sur la plate-forme d'un véhicule à charger ou à décharger, au dessus ou à l'intérieur d'une fosse, dans laquelle le tablier (8) bascule, et est monté, par son extrémité libre, dans l'état abaissé de l'élément (15) de fermeture, à distance de l'élément (15) de fermeture de la baie (2) du bâtiment qui peut être soulevé et abaissé, l'élément (15) de fermeture abaissé fermant la fosse vers l'avant, mais en étant monté au moins par son extrémité inférieure au niveau de l'extrémité libre du tablier (8), caractérisé en ce que l'élément (15) de fermeture est muni sur sa face intérieure, c'est-à-dire sur la face X tournée vers l'intérieur du bâtiment, d'un bande (19) de recouvrement, qui peut être soulevée et abaissée conjointement avec l'élément de fermeture, en vue de couvrir l'intervalle compris entre le tablier (8) et l'élément (15) de fermeture.

2. Bâtiment suivant la revendication 1, caractérisé en ce que, pour des éléments (15) de fermeture plus larges que le tablier (8), qui s'enfoncent par leurs extrémités dans un renfoncement (17), qui se trouve à côté de la fosse (7), la bande (19) de recouvrement couvre également l'intervalle (y) compris entre l'élément (15) de fermeture et le bord du renfoncement (17).

3. Bâtiment suivant la revendication 1, caractérisé en ce que la bande (19) de recouvrement a une grande rigidité élastique suffisante pour que l'on puisse y marcher ou y rouler.

4. Bâtiment suivant la revendication 1, caractérisé en ce que la bande (19) de recouvrement est d'une seule pièce.

5. Bâtiment suivant la revendication 1, caractérisé en ce que la bande (19) de recouvrement est articulée à l'élément (15) de fermeture et en ce qu'elle prend dans sa position de repos (figure 3, en haut) une position en biais telle que, lorsque l'élément (15) de fermeture est abaissé et lorsque le tablier (8) arrive, l'angle qu'elle fait avec l'élément (15) est augmenté.

6. Bâtiment suivant la revendication 1 ou 5, caractérisé en ce que la bande (19) de recouvrement est, dans sa position active, sensiblement horizontale.

7. Bâtiment suivant la revendication 5, caractérisé en ce que la bande (19) de recouvrement est bloquée par une butée (20) qui s'oppose à son basculement vers le bas.

8. Bâtiment suivant la revendication 1, caractérisé en ce que la bande (19) de recouvrement est munie dans la zone de son extrémité avant d'une partie (23) saillante dirigée vers le haut qui sert de protection de l'élément (15) de fermeture à l'encontre des coups et des heurts.

9. Bâtiment suivant la revendication 5, caractérisé en ce qu'il est associé à la bande (19) de recouvrement un interrupteur (22) de contact électrique qui agit par exemple sur le dispositif d'entraînement de l'élément (15) de fermeture et qui peut être actionné lorsque la bande (19) de recouvrement bascule vers le haut.

10. Bâtiment suivant la revendication 1, caractérisé en ce qu'au moins l'extrémité libre de la bande (19) de recouvrement peut être déformée élastiquement ou cintrée lorsque le tablier (8) arrive.

11. Bâtiment suivant la revendication 5, caractérisé en ce que la bande (19) de recouvrement est arrondie à son extrémité libre ou munie d'une roulette.
